# EUROPEAN PATENT APPLICATION

(11) **EP 3 848 147 A1**
(43) Date of publication of application: **14.07.2021**
(21) Application number: 19858276.9
(22) Date of filing: 04.09.2019
(51) Int. Cl.: B23K 26/073, B23K 26/064, B23K 26/067, B23K 26/21

(54) **WELDING METHOD AND WELDING APPARATUS**

(30) Priority: 04.09.2018 JP 2018165499
(71) Applicant: FURUKAWA ELECTRIC CO., LTD., Chiyoda-ku Tokyo 100-8322 (JP)
(72) Inventor: YASUOKA, Tomomichi, Tokyo 100-8322 (JP); KAYAHARA, Takashi, Tokyo 100-8322 (JP); SAKAI, Toshiaki, Tokyo 100-8322 (JP); NISHII, Ryosuke, Tokyo 100-8322 (JP); SHIGEMATSU, Takashi, Tokyo 100-8322 (JP)
(74) Representative: SSM Sandmair
(86) International application number: PCT/JP2019/034848
(87) International publication number: WO 2020/050335

(57) **Abstract**

A welding method includes a step of, while irradiating laser beam toward a workpiece, relatively moving the laser beam and the workpiece and, while sweeping the laser beam on the workpiece, melting the workpiece in an irradiated portion to perform welding. The laser beam is configured by a main power region and a sub-power region, at least a part of which is present on a sweeping direction side of the main power region. Power density of the main power region is equal to or higher than power density of the sub-power region. The power density of the main power region is at least power density that can generate at least a keyhole.

## Description

### Field

The present invention relates to a welding method and a welding apparatus.

### Background

Laser welding is known as one of methods of welding metal materials such as iron and copper. The laser welding is a welding method of irradiating laser beam on a welding area of a workpiece and melting the welding area with energy of the laser beam. In the welded area irradiated by the laser beam, a liquid pool of the melted metal material called molten pool is formed. Thereafter, the metal material in the molten pool solidifies, whereby welding is performed.

When the laser beam is irradiated on the workpiece, a profile of the laser beam is sometimes shaped according to a purpose of the laser beam irradiation. For example, there has been known a technology for shaping a profile of laser beam when the laser beam is used for cutting a workpiece (see, for example, Patent Literature 1) .

### Citation List

### Patent Literature

Patent Literature 1: Japanese Unexamined Patent Application No. 2010-508149

### Summary

### Technical Problem

Incidentally, according to investigations by an experiment and the like of the inventors, in the welded workpiece, a shape of a bottom surface of a weld trace, which is the solidified molten pool, is sometimes an unstable shape such as an irregular uneven shape. The unstable shape of the bottom surface of the weld trace is sometimes undesirable depending on a use of welding.

The present invention has been devised in view of the above, and an object of the present invention is to provide a welding method and a welding apparatus that can stabilize a shape of a bottom surface of a weld trace.

### Solution to Problem

To resolve the problem and attain the object, a welding method according to an embodiment of the present invention includes a step of, while irradiating laser beam toward a workpiece, relatively moving the laser beam and the workpiece and, while sweeping the laser beam on the workpiece, melting the workpiece in an irradiated area to perform welding. Further, the laser beam is configured by a main power region and a sub-power region, at least a part of the sub-power region is present on a sweeping direction side of the main power region, a power density of the main power region is equal to or higher than a power density of the sub-power region, and the power density of the main power region is at least power density that can generate a keyhole.

In the welding method according to an embodiment of the present invention, the laser beam further includes, on a sweeping direction side of the main power region, a sub-power region having power density lower than the power density of the main power region.

In the welding method according to an embodiment of the present invention, the laser beam further includes, only on a sweeping direction side of the main power region, a sub-power region having power density lower than the power density of the main power region.

In the welding method according to an embodiment of the present invention, the laser beam includes the sub-power region only on a sweeping direction side and a rear of the main power region.

In the welding method according to an embodiment of the present invention, the laser beam further disperses and includes, around the main power region, a sub-power region having power density lower than the power density of the main power region.

In the welding method according to an embodiment of the present invention, the sub-power region has an arcuate shape, which is a part of a substantial ring shape surrounding a circumference of the main power region.

In the welding method according to an embodiment of the present invention, a molten pool is formed by the main power region and the sub-power region of the laser beam.

In the welding method according to an embodiment of the present invention, the main power region and the sub-power region of the laser beam are formed such that at least parts of the molten pool formed by the main power region and the molten pool formed by the sub-power region overlap.

In the welding method according to an embodiment of the present invention, the sub-power region of the laser beam is configured by a plurality of sub-beams, the main power region of the laser beam is configured by a main beam, and at least a part of the main beam includes a region which is not overlapping the respective sub-beams.

In the welding method according to an embodiment of the present invention, a wavelength of laser beam forming at least the sub-power region of the main power region and the sub-power region is a wavelength having reflectivity lower than reflectivity of an infrared region of the workpiece.

In the welding method according to an embodiment of the present invention, a wavelength of laser beam forming the main power region is same as a wavelength of laser beam forming the sub-power region.

In the welding method according to an embodiment of the present invention, the main power region and the sub-power region are configured by laser beam emitted from a same laser system.

In the welding method according to an embodiment of the present invention, a laser system emitting laser beam to form the main power region is different from a laser system emitting laser beam to form the sub-power region.

In the welding method according to an embodiment of the present invention, the main power region and the sub-power region are formed by a beam shaper.

In the welding method according to an embodiment of the present invention, the beam shaper is a diffractive optical element.

In the welding method according to an embodiment of the present invention, the workpiece is at least two members to be welded, and a step of disposing the workpiece in a region where laser beam is irradiated is a step of disposing the at least two members to be placed one on top of another, in contact with each other, or adjacent to each other.

In the welding method according to an embodiment of the present invention, an area of the sub-power region is substantially equal to or larger than an area of the main power region.

A welding apparatus according to an embodiment of the present invention includes: a laser system; and an optical head that receives the laser beam oscillated by the laser system to generate laser beam, irradiates the generated laser beam toward a workpiece, and melts the workpiece in an irradiated portion to perform welding. Further, the optical head is configured such that the laser beam and the workpiece are capable of relatively moving, the optical head performing the melting to perform welding while sweeping the laser beam on the workpiece, and the laser beam is configured by a main power region and a sub-power region, at least a part of the sub-power region is present on a sweeping direction side, and power density of a main power region is equal to or higher than power density of a sub-power region.

In the welding apparatus according to an embodiment of the present invention, the power density of the sub-power region is at least the power density that can melt the workpiece.

In the welding apparatus according to an embodiment of the present invention, the laser beam further includes, on a sweeping direction side of the main power region, a sub-power region having power density lower than the power density of the main power region.

In the welding apparatus according to an embodiment of the present invention, the laser beam further includes the sub-power region only on a sweeping direction side of the main power region.

In the welding apparatus according to an embodiment of the present invention, the laser beam includes the sub-power region only on a sweeping direction side and a rear of the main power region.

In the welding apparatus according to an embodiment of the present invention, the laser beam further disperses and includes, around the main power region, a sub-power region having power density lower than the power density of the main power region.

In the welding apparatus according to an embodiment of the present invention, the sub-power region has an arcuate shape, which is a part of a ring shape surrounding a circumference of the main power region.

In the welding apparatus according to an embodiment of the present invention, the main power region and the sub-power region of the laser beam are configured to respectively form molten pools.

In the welding apparatus according to an embodiment of the present invention, the main power region and the sub-power region of the laser beam are formed such that at least parts of a molten pool formed by the main power region and a molten pool formed by the sub-power region overlap with each other.

In the welding apparatus according to an embodiment of the present invention, a wavelength of laser beam forming at least the sub-power region of the main power region and the sub-power region is a wavelength having reflectivity lower than reflectivity of an infrared region of the workpiece.

In the welding apparatus according to an embodiment of the present invention, a wavelength of laser beam forming the main power region is a same as a wavelength of laser beam forming the sub-power region.

In the welding apparatus according to an embodiment of the present invention, the optical head generates, from the laser beam oscillated by a single laser system, the laser beam including the main power region and the sub-power region.

In the welding apparatus according to an embodiment of the present invention, the optical head includes a beam shaper disposed between the laser system and the workpiece, and the beam shaper forms the main power region and the sub-power region from the laser beam oscillated by the single laser system.

In the welding apparatus according to an embodiment of the present invention, the beam shaper is a diffractive optical element.

In the welding apparatus according to an embodiment of the present invention, the laser system is configured from different two laser systems, and the main power region and the sub-power region are respectively configured by laser beam emitted from the different two laser systems.

In the welding apparatus according to an embodiment of the present invention, the workpiece is at least two members to be welded.

In the welding apparatus according to an embodiment of the present invention, an area of the sub-power region is substantially equal to or larger than an area of the main power region.

In the welding apparatus according to an embodiment of the present invention, the beam shaper is rotatably provided.

In the welding apparatus according to an embodiment of the present invention, the welding apparatus includes a plurality of laser systems as the laser system, and the optical head combines laser beams emitted from the plurality of laser systems to generate the laser beam.

In the welding apparatus according to an embodiment of the present invention, the welding apparatus includes a plurality of laser systems as the laser system and further includes a multi-core fiber that combines the laser bemas emitted from the plurality of laser systems and guides the laser beams to the optical head.

In the welding apparatus according to an embodiment of the present invention, the optical head is configured to be capable of sweeping the laser beam on the fixed workpiece.

In the welding apparatus according to an embodiment of the present invention, an irradiation position of the laser beam from the optical head is fixed, and the workpiece is held to be movable with respect to the fixed laser beam.

### Advantageous Effects of Invention

The welding method and the welding apparatus according to the present invention achieves an effect that it is possible to stabilize a shape of a bottom surface of a weld trace.

### Brief Description of Drawings

FIG. 1 is a diagram illustrating a schematic configuration of a welding apparatus according to a first embodiment.
FIG. 2 is a diagram for explaining a concept of a diffractive optical element.
FIG. 3 is a diagram illustrating an example of a sectional shape of laser beam.
FIG. 4A is a sectional view illustrating a state in which the laser beam melts a workpiece.
FIG. 4B is a sectional view perpendicular to FIG. 4A illustrating the state in which the laser beam melts the workpiece.
FIG. 5A is a sectional view illustrating a state in which laser beam melts the workpiece.
FIG. 5B is a sectional view perpendicular to FIG. 5A illustrating the state in which the laser beam melts the workpiece.
FIG. 6A is a diagram illustrating an example of a sectional shape of laser beam.
FIG. 6B is a diagram illustrating an example of a sectional shape of the laser beam.
FIG. 6C is a diagram illustrating an example of a sectional shape of the laser beam.
FIG. 6D is a diagram illustrating an example of a sectional shape of the laser beam.
FIG. 6E is a diagram illustrating an example of a sectional shape of the laser beam.
FIG. 6F is a diagram illustrating an example of a sectional shape of the laser beam.
FIG. 6G is a diagram illustrating an example of a sectional shape of the laser beam.
FIG. 7 is a diagram illustrating a schematic configuration of a welding apparatus according to a second embodiment.
FIG. 8 is a diagram illustrating a schematic configuration of a welding apparatus according to a third embodiment.
FIG. 9 is a diagram illustrating a schematic configuration of a welding apparatus according to a fourth embodiment.
FIG. 10 is a diagram illustrating a schematic configuration of a welding apparatus according to a fifth embodiment.
FIG. 11 is a diagram illustrating a schematic configuration of a welding apparatus according to a sixth embodiment.
FIG. 12A is a diagram illustrating a configuration example of an optical fiber.
FIG. 12B is a diagram illustrating a configuration example of an optical fiber.
FIG. 13 is a diagram illustrating a sectional shape of laser beam used for an experiment.
FIG. 14A is a sectional photograph of a workpiece in a comparative example of No. 1 in Table 1.
FIG. 14B is a sectional photograph of a workpiece in an example of No. 2 in Table 1.
FIG. 15A is a schematic diagram for explaining an example of a power distribution shape of laser beam.
FIG. 15B is a schematic diagram for explaining an example of a power distribution shape of laser beam.

### Description of Embodiments

Welding methods and welding apparatuses according to embodiments of the present invention are explained in detail below with reference to the accompanying drawings. Note that the present invention is not limited by the embodiments explained below. It is to be noted that the drawings are schematic and relations among dimensions of elements, ratios of the elements, and the like are sometimes different from real ones. Among the drawings, portions where relations and ratios of dimensions thereof are different are sometimes included.

### (First Embodiment)

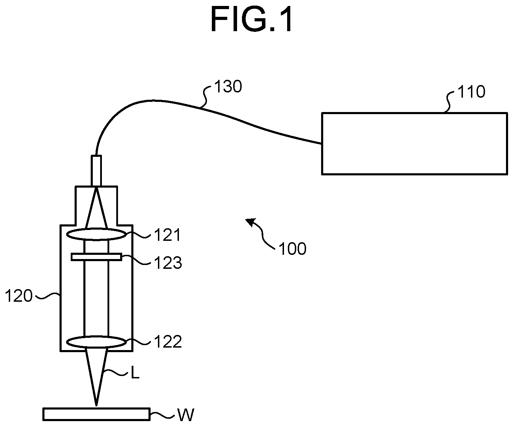

FIG. 1 is a diagram illustrating a schematic configuration of a welding apparatus according to a first embodiment. As illustrated in FIG. 1, a welding apparatus 100 according to a first embodiment is an example of a configuration of an apparatus that irradiates laser beam L on a workpiece W to melt the workpiece W. As illustrated in FIG. 1, a welding apparatus 100 includes a laser system 110 that oscillates laser beam, an optical head 120 that irradiates laser beam on the workpiece W, and an optical fiber 130 that guides the laser beam oscillated by the laser system 110 to the optical head 120. The workpiece W is configured by at least two members that should be welded.

The laser system 110 is configured to be able to oscillate, for example, laser beam in a multi-mode having an output of several kW. For example, the laser system 110 may include a plurality of semiconductor laser elements on the inside and may be configured to be able to oscillate the laser beam in the multi-mode having an output of several kW, which is a total output of the plurality of semiconductor laser elements. Various lasers such as a fiber laser, a YAG laser, and a disk laser may be used.

The optical head 120 is an optical device for focusing the laser beam L guided from the laser system 110 to predetermined power density and irradiating the laser beam L on the workpiece W. Therefore, the optical head 120 includes a collimate lens 121 and a focusing lens 122 on the inside. The collimate lens 121 is an optical system for once collimating the laser beam L guided by the optical fiber 130. The focusing lens 122 is an optical system for focusing the collimated laser beam L on the workpiece W.

The optical head 120 is provided to be capable of changing a relative position to the workpiece W in order to move (sweep) an irradiation position of the laser beam L in the workpiece W. A method of changing the relative position to the workpiece W includes moving the optical head 120 itself or moving the workpiece W. That is, the optical head 120 may be configured to be capable of sweeping the laser beam L on the fixed workpiece W. Alternatively, an irradiation position of the laser beam L from the optical head 120 may be fixed and the workpiece W may be held to be capable of moving with respect to the fixed laser beam L. In a process for disposing the workpiece W in a region where the laser beam L is irradiated, at least two members that should be welded are disposed to be placed one on top of the other, in contact with each other, or adjacent to each other.

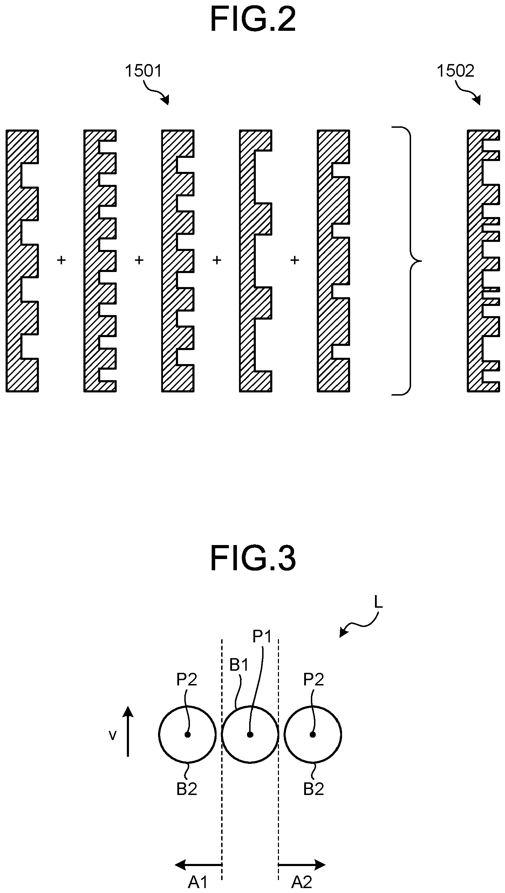

The optical head 120 according to the first embodiment includes a diffractive optical element 123 functioning as a beam shaper between the collimate lens 121 and the focusing lens 122. The diffractive optical element indicates an optical element 1502 obtained by integrating a plurality of diffraction gratings 1501 having different periods, a concept of which is as illustrated in FIG. 2. Laser beam passed through the diffractive optical element 123 are bent in a direction affected by the diffraction gratings and overlap. The laser beam can be formed in any shape. The diffractive optical element 123 may be configured to be rotatably provided. The diffractive optical element 123 may also be configured to be replaceably provided.

In this embodiment, the diffractive optical element 123 is for shaping the laser beam L such that a profile concerning a moving direction of power density of the laser beam L on the workpiece W has, further on a moving direction side than a main beam having high power density, a sub-beam having power density equal to or lower than power density of the main beam.

The laser beam L shaped by the diffractive optical element 123 is configured by a main beam B1 having a peak P1 and two sub-beams B2 having a peak P2 as indicated by an example of a sectional shape on a surface perpendicular to a traveling direction of the laser beam L in FIG. 3. An arrow v indicates a relative moving direction of the laser beam L with respect to the workpiece W and is equivalent to a sweeping direction. The two sub-beams B2 are located on sides of the main beam B1 when the sweeping direction is set as the front. The sides of the main beam B1 mean regions A1 and A2 defined by broken lines passing positions of a beam diameter of the main beam B1 and parallel to the sweeping direction as illustrated in FIG. 3. In an example illustrated in FIG. 3, the two sub-beams B2 are arranged such that a line connecting the centers of beam diameters of the two sub-beams B2 passes substantially the center of the beam diameter of the main beam B1 and the line is substantially perpendicular to the sweeping direction. However, the positions of the sub-beams B2 are not limited to this. If the sub-beams B2 are located somewhere in the regions A1 and A2, the sub-beams B2 can be regarded as being located on the sides of the main beam B1. The rear of the main beam B1 is a direction on the opposite side of the moving direction in a region sandwiched by the region A1 and the region A2.

Note that the power density of the main beam or the sub-beam is power density in a region including a peak and having strength equal to or more than 1/e² of peak strength. A beam diameter of the main beam or the sub-beam is a diameter of the region including the peak and having the strength equal to or more than 1/e² of the peak strength. In the case of a beam that is not circular, in this specification, length of a region having the strength equal to or more than 1/e² of the peak strength of a longer axis (for example, a major axis) passing near the center of the beam or a shorter axis (for example, a minor axis) in a direction perpendicular to the longer axis (the major axis) is defined as a beam diameter. The beam diameter of the sub-beam may be substantially equal to or larger than the beam diameter of the main beam. Therefore, the area of the sub-beam may be substantially equal to or larger than the area of the main beam.

It is preferable that a power distribution of at least the main beam B1 have a sharp shape to a certain degree. If the power distribution of the main beam B1 has the sharp shape to a certain degree, penetration depth in melting the workpiece W can be increased. Therefore, welding strength can be secured. When the beam diameter is used as an indicator of sharpness of the main beam B1, the beam diameter of the main beam B1 is preferably 600 µm or less and more preferably 400 µm or less. Note that, when the main beam B1 has the sharp shape, power for realizing the same penetration depth can be reduced and machining speed can be increased. Accordingly, it is possible to realize a reduction of power consumption of the laser welding apparatus 100 and improvement of machining efficiency. The power distribution of the sub-beams B2 may be sharp in the same degree as the main beam B1.

Note that the beam diameter can be adjusted by setting, as appropriate, characteristics of a laser device 110, the optical head 120, and the optical fiber 130 in use. For example, the beam diameter can be adjusted by setting of a beam diameter of laser beam input to the optical head 120 from the optical fiber 130 or setting of optical systems such as the diffractive optical element 123 and lenses 121 and 122.

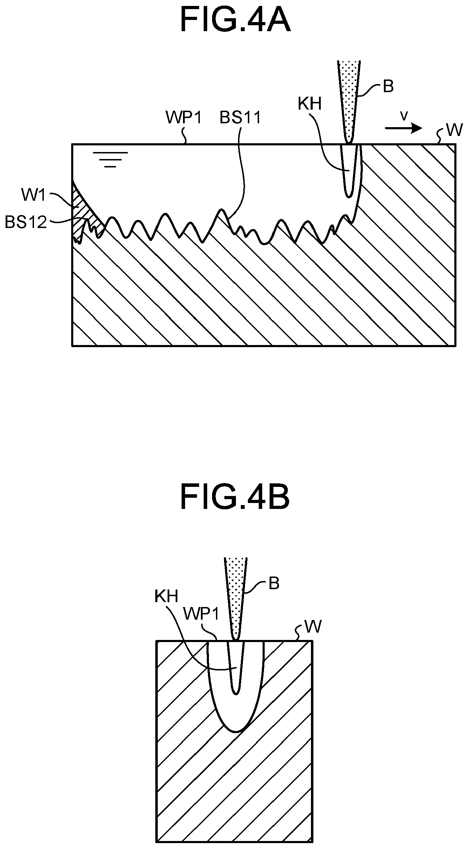

Action of a profile concerning the moving direction of power density of the laser beam L on the workpiece W having, further on the moving direction side than the main beam having high power density, the sub-beam having the power density equal to or lower than the power density of the main beam is not always clarified but is considered to be, for example, as explained below. FIGS. 4A to 5B are diagrams illustrating states in which laser beam melts a workpiece.

FIG. 4A illustrates a cross section of the workpiece W along the moving direction (the arrow v) of the laser beam. FIG. 4B illustrates a cross section perpendicular to the cross section illustrated in FIG. 4A. When the laser beam is configured by one beam B, a molten pool WP1 obtained by melting the workpiece W is formed as a weld region to extend in the opposite direction of the moving direction from a position where the beam B of the laser beam is irradiated. The molten pool WP1 solidifies to be a weld trace W1. A shape of a bottom surface BS11 of the weld trace W1 is sometimes an unstable shape such as an irregular uneven shape.

A reason for this is not always clarified but is considered that the bottom surface BS11 of the molten pool WP1 has an unstable shape and the molten pool WP1 solidifies to be the weld trace W1 while keeping reflecting the shape to a certain degree. In this case, the reason is also considered to be that, for example, a liquid surface of the molten pool WP1 is unstably swayed by energy given by the beam B or a keyhole KH generated by the energy and the bottom surface BS11 changes to the unstable shape according to the swaying of the liquid surface.

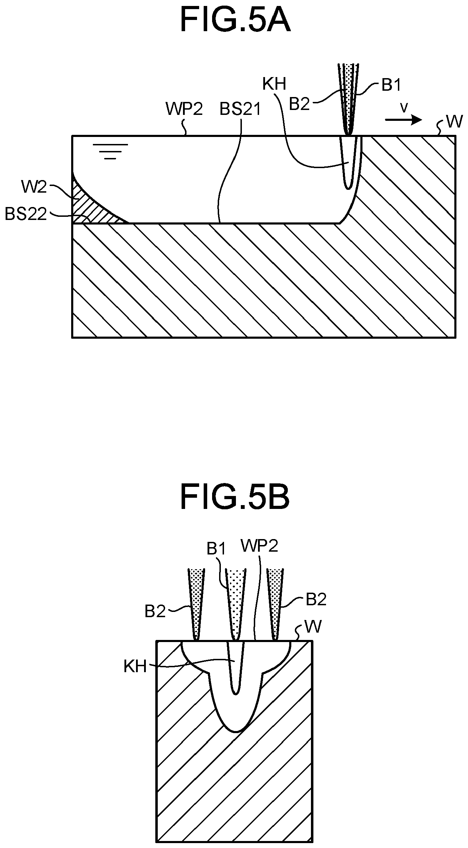

In contrast, as illustrated in FIG. 5A and FIG. 5B, in the welding apparatus and the welding method using the welding apparatus according to the first embodiment, the profile concerning the moving direction of the power density of the laser beam L on the workpiece W has the main beam B1 and the two sub-beams B2. The power density of the main beam B1 is, for example, at least strength that can generate a keyhole. Both of the two sub-beams B2 have power density lower than the power density of the main beam B1 and are located on the moving direction sides of the laser beam L with respect to the main beam B1. The power density of the sub-beams B2 is density that can melt the workpiece W under the presence of the main beam B1 or independently. Therefore, as illustrated in FIG. 5B, a molten pool WP2 spreading to positions, where the sub-beams B2 are irradiated, on sides of a position where the main beam B1 is irradiated is formed as a weld region. When the power density of the sub-beams B2 is lower than the power density of the main beam B1, a shallow region, which is a region shallower than depth melted by the main beam B1, is formed by the sub-beams B2.

Note that melting strength regions of the main beam B1 and the sub-beams B2 may overlap but do not need to always overlap. Molten pools formed by the beams only have to be connected. The melting strength region means a range of a beam of laser beam having power density that can melt the workpiece W around the main beam B1 or the sub-beams B2.

In the welding apparatus and the welding method using the welding apparatus according to the first embodiment, a shape of a bottom surface BS22 of a weld trace W2, which is the solidified molten pool WP2, is a stable shape having less unevenness and higher flatness than a bottom surface BS12 by the beam B illustrated in FIG. 4. A reason for this is not always clarified but is considered that a bottom surface BS21 of the molten pool WP2 has a stabler shape. A reason for this is considered that, for example, since the molten pool WP2 further spreading to the sides than in the case of FIG. 4 is formed by the main beam B1 and the sub-beams B2, energy is diffused, the swaying of the liquid surface of the molten pool WP2 is suppressed or the unstable movement of the keyhole KH is suppressed and the bottom surface BS21 has the stable shape according to the suppression of the swaying of the liquid surface of the molten pool WP2 or the suppression of the unstable movement of the keyhole KH.

The welding method according to the first embodiment includes a step of disposing the workpiece W in a region where the laser beam L from the laser system 110, which is a laser device, is irradiated, relatively moving the laser beam L and the workpiece W while irradiating the laser beam L from the laser system 110 toward the workpiece W, and melting the workpiece W in an irradiated portion and performing welding while sweeping the laser beam L on the workpiece W. At this time, the laser beam L is configured by the main beam B1 and the sub-beams B2, at least a part of which is present on sweeping direction sides. Power density of the main beam B1 is equal to or higher than power density of the sub-beams B2. The step of disposing the workpiece W in the region where the laser beam L is irradiated is a step of disposing at least two members to be placed one on top of the other, in contact with each other, or adjacent to each other.

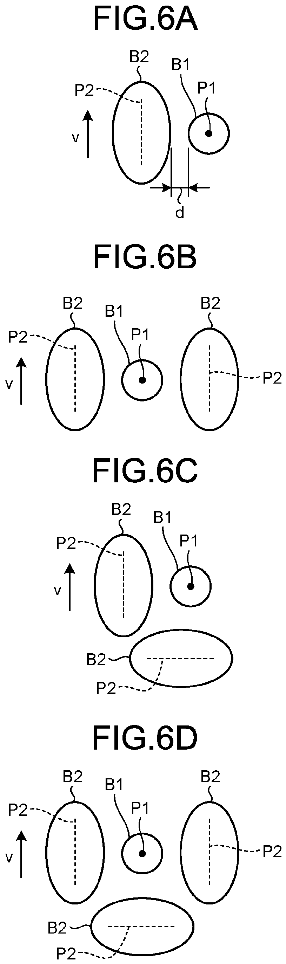

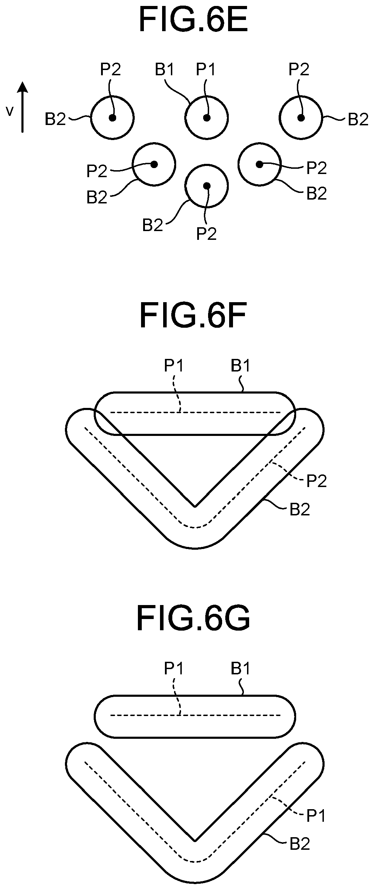

Subsequently, an example of a sectional shape of laser beam for a profile concerning a moving direction of power density of the laser beam on a workpiece to have sub-beams on moving direction sides of the main beam is explained with reference to FIGS. 6A to 6G. The example of the sectional shape of the laser beam illustrated in FIG. 6 is not an essential configuration. However, a profile of laser beam suitable for carrying out the present invention is realized by designing the diffractive optical element 123 such that the sectional shape of the laser beam illustrated in FIG. 6 is realized on the surface of the workpiece W.

FIG. 6A is an example in which the sub-beam B2 having the peak P2 is arranged on the moving direction left side of the main beam B1 having the peak P1. It is preferable that a region of power density that can melt the workpiece around the sub-beam B2 is wider concerning the moving direction than a region of power density that can melt the workpiece around the main beam B1. Therefore, the sub-beam B2 may be formed in a shape extending in a certain direction. Such a shape of the sub-beam B2 may be realized by arranging a plurality of beams close to one another or may be realized by a single beam.

FIG. 6B is an example in which the sub-beams B2 are respectively arranged on the moving direction left and right sides of the main beam B1.

FIG. 6C is an example in which the sub-beams B2 are not only arranged on the moving direction left side of the main beam B1 but the sub-beam B2 having power density lower than the power density of the main beam B1 is also arranged in the moving direction rear of the main beam B1. In this example, even when a moving direction of the main beam B1 and the sub-beams B2 changes, the sub-beam B2 can be arranged on the moving direction side of the main beam B1.

FIG. 6D is an example in which the sub-beams B2 are not only arranged on the moving direction left and right sides of the main beam B1 but the sub-beam B2 having power density lower than the power density of the main beam B1 is also arranged in the moving direction rear of the main beam B1. In this example as well, even when the moving direction of the main beam B1 and the sub-beams B2 changes, the sub-beams B2 can be arranged on the moving direction sides of the main beam B1.

FIG. 6E is an example in which the sub-beams B2 having power density lower than the power density of the main beam B1 are dispersed and arranged around the main beam B1. The sub-beams B2 are arranged to form an arcuate shape, which is a part of a substantial ring shape surrounding the circumference of the main beam B1. In the examples illustrated in FIGS. 6A to 6E, the sub-beams B2 are formed in a linear shape. However, in FIG. 6E, the sub-beams B2 are arranged at close intervals to a certain degree and molten pools formed by the sub-beams B2 are connected.

FIG. 6F and FIG. 6G are examples in which a V-shaped sub-beam B2 having power density lower than the power density of the main beam B1 is arranged from the moving direction side to the rear of the main beam B1. FIG. 6F is an example in which the main beam B1 and the sub-beam B2 overlap. FIG. 6G is an example in which the main beam B1 and the sub-beam B2 do not overlap.

FIG. 6C to FIG. 6G are examples in which at least a part of the sub-beam(s) B2 is present on the side of the main beam B1 and are examples in which the sub-beam B2 is arranged only on the moving direction side and in the rear of the main beam B1. FIG. 6A and FIG. 6B are examples in which the sub-beam(s) B2 is arranged only on the moving direction side of the main beam B1.

Note that a distance d (for example, illustrated in FIG. 6A) between the main beam B1 and the sub-beam(s) B2 is the shortest distance between the outer edge of the beam diameter of the main beam B1 and the outer edge of the beam diameter of the sub-beam B2. The distance d only has to be a distance for enabling a molten pool formed by the sub-beam B2 and a weld region formed by the main beam B1 in the molten pool to come into contact and is preferably less than ten times, more preferably less than six times, still more preferably less than three times, and yet still more preferably less than one time of the beam diameter of the main beam.

The power density of the main beam B1 and the power density of the sub-beam(s) B2 may be equal.

In the examples in FIG. 6A to FIG. 6G, at least a part of the main beam has a region not overlapping the respective sub-beams

### (Second Embodiment)

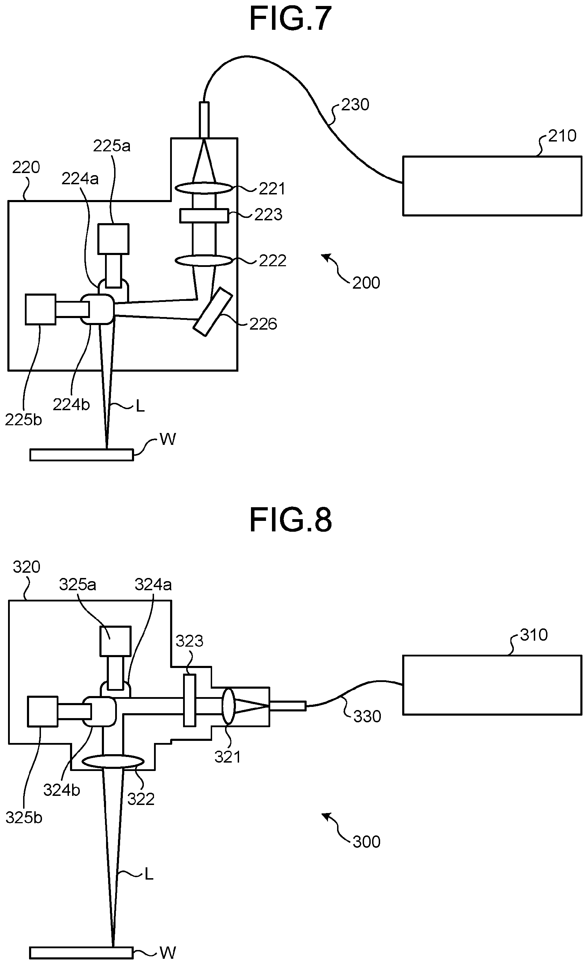

FIG. 7 is a diagram illustrating a schematic configuration of a welding apparatus according to a second embodiment. As illustrated in FIG. 7, a welding apparatus 200 according to the second embodiment is an example of a configuration of an apparatus that irradiates the laser beam L on the workpiece W to melt the workpiece W. The welding apparatus 200 according to the second embodiment realizes a welding method according to the same action principle as the action principle of the welding apparatus according to the first embodiment. Therefore, in the following explanation, an apparatus configuration of the welding apparatus 200 is only explained.

As illustrated in FIG. 7, the welding apparatus 200 includes a laser system 210 that oscillates laser beam, an optical head 220 that irradiates the laser beam on the workpiece W, and an optical fiber 230 that guides the laser beam oscillated by the laser system 210 to the optical head 220.

The laser system 210 is configured to be able to oscillate, for example, laser beam in a multi-mode having an output of several kW. For example, the laser system 210 may include a plurality of semiconductor laser elements on the inside and may be configured to be able to oscillate the laser beam in the multi-mode having an output of several kW, which is a total output of the plurality of semiconductor laser elements. Various lasers such as a fiber laser, a YAG laser, and a disk laser may be used.

The optical head 220 is an optical device for focusing the laser beam L guided from the laser system 210 to predetermined power density and irradiating the laser beam L on the workpiece W. Therefore, the optical head 220 includes a collimate lens 221 and a focusing lens 222 on the inside. The collimate lens 221 is an optical system for once collimating the laser beam guided by the optical fiber 230. The focusing lens 222 is an optical system for focusing the collimated laser beam on the workpiece W.

The optical head 220 includes a Galvano scanner between the focusing lens 222 and the workpiece W. The Galvano scanner is a device that can move an irradiation position of the laser beam L without moving the optical head 220 by controlling angles of two mirrors 224a and 224b. In an example illustrated in FIG. 7, the optical head 220 includes a mirror 226 in order to guide the laser beam L emitted from the focusing lens 222 to the Galvano scanner. The angles of the mirrors 224a and 224b of the Galvano scanner are respectively changed by motors 225a and 225b.

The optical head 220 according to the second embodiment includes a diffractive optical element 223 between the collimate lens 221 and the focusing lens 222. The diffractive optical element 223 is for shaping the laser beam L such that a profile concerning a moving direction of power density of the laser beam L on the workpiece W has, on a moving direction side of a main beam, a sub-beam having power density equal to or lower than power density of the main beam. Action of the diffractive optical element 223 is the same as the action in the first embodiment. That is, the diffractive optical element 223 is designed to realize a profile of laser beam suitable for carrying out the present invention like the sectional shape of the laser beam illustrated in FIG. 6.

### (Third Embodiment)

FIG. 8 is a diagram illustrating a schematic configuration of a welding apparatus according to the third embodiment. As illustrated in FIG. 8, a welding apparatus 300 according to the third embodiment is an example of a configuration of an apparatus that irradiates the laser beam L on the workpiece W to melt the workpiece W. The welding apparatus 300 according to the third embodiment realizes a welding method according to the same action principle as the action principle of the welding apparatus according to the first embodiment. Components (a laser system 310 and an optical fiber 330) other than an optical head 320 are the same as the components in the second embodiment. Therefore, in the following explanation, an apparatus configuration of the optical head 320 is only explained.

The optical head 320 is an optical device for focusing the laser beam L guided from the laser system 310 to predetermined power density and irradiating the laser beam L on the workpiece W. Therefore, the optical head 320 includes a collimate lens 321 and a focusing lens 322 on the inside. The collimate lens 321 is an optical system for once collimating the laser beam guided by the optical fiber 330. The focusing lens 322 is an optical system for focusing the collimated laser beam on the workpiece W.

The optical head 320 includes a Galvano scanner between the collimate lens 321 and the focusing lens 322. Angles of mirrors 324a and 324b of the Galvano scanner are respectively changed by motors 325a and 325b. In the optical head 320, the Galvano scanner is provided in a position different from the position in the second embodiment. However, as in the second embodiment, the Galvano scanner can move an irradiation position of the laser beam L without moving the optical head 320 by controlling the angles of the two mirrors 324a and 324b.

The optical head 320 according to the third embodiment includes a diffractive optical element 323 between the collimate lens 321 and the focusing lens 322. The diffractive optical element 323 is for shaping the laser beam L such that a profile concerning a moving direction of power density of the laser beam L on the workpiece W has, on a moving direction side of a main beam, a sub-beam having power density equal to or lower than power density of the main beam. Action of the diffractive optical element 323 is the same as the action in the first embodiment. That is, the diffractive optical element 323 is designed to realize a profile of laser beam suitable for carrying out the present invention like the sectional shape of the laser beam illustrated in FIG. 6.

### (Fourth Embodiment)

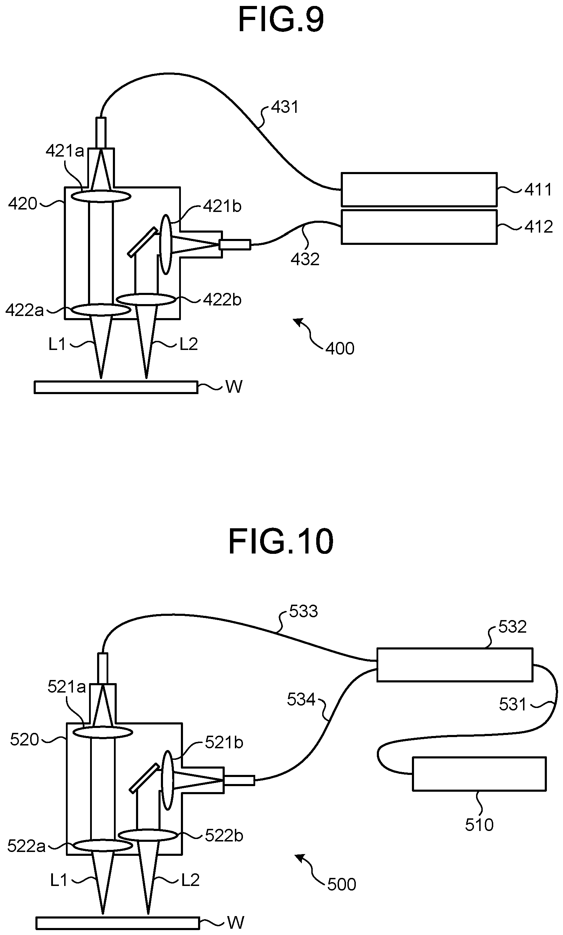

FIG. 9 is a diagram illustrating a schematic configuration of a welding apparatus according to a fourth embodiment. As illustrated in FIG. 9, a welding apparatus 400 according to the fourth embodiment is an example of a configuration of an apparatus that irradiates laser beams L1 and L2 on the workpiece W to melt the workpiece W. The welding apparatus 400 according to the fourth embodiment realizes a welding method according to the same action principle as the action principle of the welding apparatus according to the first embodiment. Therefore, in the following explanation, an apparatus configuration of the welding apparatus 400 is only explained.

As illustrated in FIG. 9, the welding apparatus 400 includes a plurality of laser systems 411 and 412 that oscillate laser beam, an optical head 420 that irradiates the laser beam on the workpiece W, and optical fibers 431 and 432 that guide the laser beam oscillated by the laser systems 411 and 412 to the optical head 420.

The laser systems 411 and 412 are configured to be able to oscillate, for example, laser beam in a multi-mode having an output of several kW. For example, the laser systems 411 and 412 may include a plurality of semiconductor laser elements on the inside of each of the laser systems 411 and 412 and may be configured to be able to oscillate the laser beam in the multi-mode having an output of several kW, which is a total output of the plurality of semiconductor laser elements. Various lasers such as a fiber laser, a YAG laser, and a disk laser may be used.

The optical head 420 is an optical device for focusing the laser beam beams L1 and L2 guided from the laser systems 411 and 412 to predetermined power density and irradiating the laser beams L1 and L2 on the workpiece W. Therefore, the optical head 420 includes a collimate lens 421a and a focusing lens 422a for the laser beam L1 and a collimate lens 421b and a focusing lens 422b for the laser beam L2. The collimate lenses 421a and 421b are respectively optical systems for once collimating the laser beam guided by the optical fibers 431 and 432. The focusing lenses 422a and 422b are optical systems for focusing the collimated laser beam on the workpiece W.

The optical head 420 according to the fourth embodiment is also configured such that a profile concerning a moving direction of power density of the laser beams L1 and L2 on the workpiece W has, on a moving direction side of a main beam, a sub-beam having power density equal to or lower than power density of the main beam. That is, for example, of the laser beams L1 and L2 irradiated on the workpiece W by the optical head 420, the laser beam L1 only has to be used for main beam formation and the laser beam L2 only has to be used for sub-beam formation. Note that, in an example illustrated in the figure, only the laser beams L1 and L2 are used. However, the number of laser beam may be increased. The optical head 420 only has to be configured to realize a profile of laser beam suitable for carrying out the present invention like the sectional shape of the laser beam illustrated in FIG. 6. Note that wavelengths of the laser beams L1 and L2 may be the same or may be different from each other. Similarly, when the number of laser beams is three or more, wavelengths of at least two laser beams among the laser beams may be different from each other or wavelengths of all the laser beams may be the same. A wavelength of laser beams forming at least the sub-beam of the main beam and the sub-beam may be a wavelength having reflectivity lower than reflectivity of an infrared region of the workpiece, for example, a wavelength of a visible region.

### (Fifth Embodiment)

FIG. 10 is a diagram illustrating a schematic configuration of a welding apparatus according to a fifth embodiment. As illustrated in FIG. 10, a welding apparatus 500 according to the fifth embodiment is an example of a configuration of an apparatus that irradiates the laser beams L1 and L2 on the workpiece W to melt the workpiece W. The welding apparatus 500 according to the fifth embodiment realizes a welding method according to the same action as the action of the welding apparatus according to the first embodiment. Therefore, in the following explanation, an apparatus configuration of the welding apparatus 500 is only explained.

As illustrated in FIG. 10, the welding apparatus 500 includes a laser system 510 that oscillates laser beam, an optical head 520 that irradiates the laser beam on the workpiece W, and optical fibers 531, 533, and 534 that guide the laser beam oscillated by the laser system 510 to the optical head 520.

In the fifth embodiment, the laser system 510 is, for example, a fiber laser, a YAG laser, or a disk laser and is used to oscillate both of the laser beams L1 and L2 irradiated on the workpiece W. Therefore, a dividing unit 532 is provided between the optical fiber 531 and the optical fibers 533 and 534 that guide the laser beam oscillated by the laser system 510 to the optical head 520 and is configured to divide the laser beam oscillated by the laser system 510 and then guide the laser beam to the optical head 520.

The optical head 520 is an optical device for focusing the laser beams L1 and L2 divided by the dividing unit 532 to predetermined power density and irradiating the laser beams L1 and L2 on the workpiece W. Therefore, the optical head 520 includes a collimate lens 521a and a focusing lens 522a for the laser beam L1 and a collimate lens 521b and a focusing lens 522b for the laser beam L2. The collimate lenses 521a and 521b are respectively optical systems for once collimating the laser beam guided by the optical fibers 533 and 534. The focusing lenses 522a and 522b are optical systems for focusing the collimated laser beam on the workpiece W.

The optical head 520 according to the fifth embodiment is also configured such that a profile concerning a moving direction of power density of the laser beams L1 and L2 on the workpiece W has, on a moving direction side of a main beam, a sub-beam having power density equal to or lower than power density of the main beam. That is, for example, of the laser beams L1 and L2 irradiated on the workpiece W by the optical head 520, the laser beam L1 only has to be used for main beam formation and the laser beam L2 only has to be used for sub-beam formation. Note that, in an example illustrated in the figure, only the laser beams L1 and L2 are used. However, the number of laser beams may be increased. The optical head 420 only has to be configured to realize a profile of laser beam suitable for carrying out the present invention like the sectional shape of the laser beam illustrated in FIG. 6.

### (Sixth Embodiment)

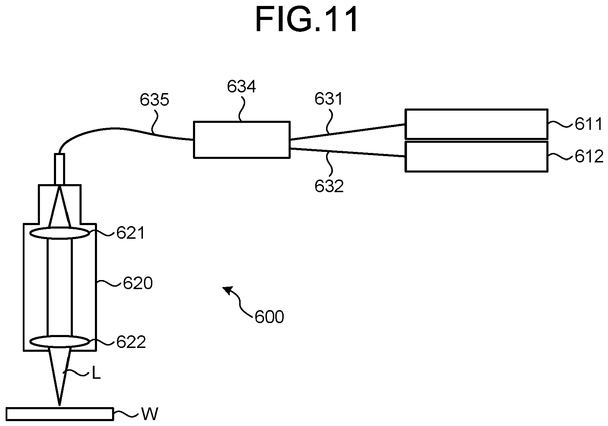

FIG. 11 is a diagram illustrating a schematic configuration of a welding apparatus according to a sixth embodiment. As illustrated in FIG. 11, a welding apparatus 600 according to the sixth embodiment is an example of a configuration of an apparatus that irradiates the laser beam L on the workpiece W to melt the workpiece W. The welding apparatus 600 according to the sixth embodiment realizes a welding method according to the same action principle as the action principle of the welding apparatus according to the first embodiment. Therefore, in the following explanation, an apparatus configuration of the welding apparatus 600 is only explained.

As illustrated in FIG. 11, the welding apparatus 600 includes a plurality of laser systems 611 and 612 that oscillate a laser beam, which is, for example, a fiber laser, a YAG laser, or a disk laser, an optical head 620 that irradiates the laser beam on the workpiece W, and optical fibers 631, 632, and 635 that guide the laser beam oscillated by the laser systems 611 and 612 to the optical head 620.

In the sixth embodiment, the laser beams oscillated by the laser systems 611 and 612 are combined before being guided to the optical head 620. Therefore, a combining unit 634 is provided between the optical fibers 631 and 632 and the optical fiber 635 that guide the laser beam oscillated by the laser systems 611 and 612 to the optical head 620. The laser beam oscillated by the laser systems 611 and 612 are guided in the optical fiber 635 in parallel.

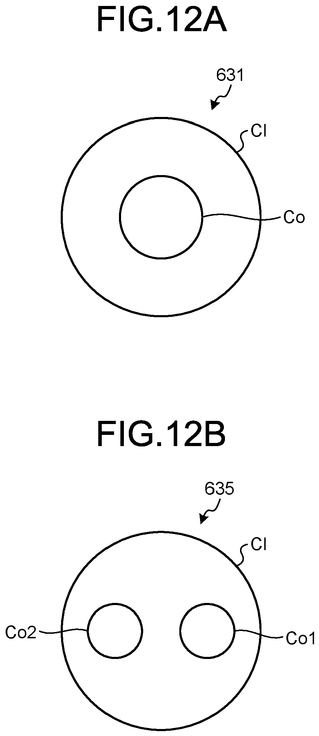

Configuration examples of the optical fiber 631 (and 632) and the optical fiber 635 are explained with reference to FIGS. 12A and 12B. As illustrated in FIG. 12A, the optical fiber 631 (and 632) is a normal optical fiber. That is, the optical fiber 631 (and 632) is an optical fiber in which, around one core Co, a clad Cl having a refractive index lower than the refractive index of the core Co is formed. On the other hand, as illustrated in FIG. 12B, the optical fiber 635 is an optical fiber of a so-called multi-core. That is, the optical fiber 635 includes two cores Co1 and Co2. Around the two cores Co1 and Co2, the clad Cl having a refractive index lower than the refractive index of the cores Co1 and Co2 is formed. In the combining unit 634, the core Co of the optical fiber 631 and the core Co1 of the optical fiber 635 are combined and the core Co of the optical fiber 632 and the core Co2 of the optical fiber 635 are combined.

Referring back to FIG. 11, The optical head 620 is an optical device for focusing the laser beam L combined by the combining unit 634 to predetermined power density and irradiating the laser beam L on the workpiece W. Therefore, the optical head 620 includes a collimate lens 621 and a focusing lens 622 on the inside.

In this embodiment, the optical head 620 does not include a diffractive optical element and does not include an independent optical system for a plurality of laser beams either. However, since the laser beams oscillated by the laser systems 611 and 612 are combined before being guided to the optical head 620, the optical head 620 is configured such that a profile concerning a moving direction of power density of the laser beam L on the workpiece W has, on a moving direction side of a main beam, a sub-beam having power density equal to or lower than power density of the main beam.

Note that, concerning all the embodiments in this specification, a welding form of the main beam may be keyhole-type welding or may be thermal conduction-type welding. The keyhole-type welding is a welding method using a keyhole. On the other hand, the thermal conduction-type welding is a welding method for melting the workpiece W using heat generated by laser beam being absorbed on the surface of a preform.

### (Experiment examples)

Subsequently, experiment examples are explained. In the experiment examples, an apparatus configuration of an example was the configuration of the welding apparatus 100 according to the first embodiment and, as an apparatus configuration of a comparative example, a configuration obtained by excluding the diffractive optical element 123 from the welding apparatus 100 was used. Note that, as common experiment conditions, an output of the laser system 110 was set to 3 kW and relative moving speed of the optical head 120 and the workpiece W was set to 5 m/minute.

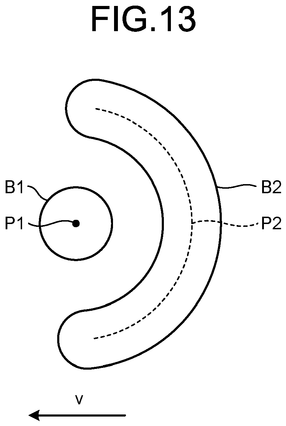

The diffractive optical element 123 is configured such that, as illustrated in FIG. 13, laser beam is formed by the main beam B1 having the peak P1 and the sub-beam B2 having the peak P2 and a sectional shape of arcuate laser beam, which is a part of a ring shape of the sub-beam B2 surrounding the circumference of the main beam B1, is irradiated on the workpiece W. An experiment was performed by moving the laser beam shaped by the diffractive optical element 123 in a moving direction indicated by an arrow v in the figure. In the apparatus configuration of the comparative example, laser beam obtained by deleting an arcuate portion from the sectional shape of the laser beam illustrated in FIG. 13 is irradiated on the workpiece W.

Table 1 illustrates two experiment examples. A material of a workpiece is SUS304 having thickness of 10 mm. DOE is a diffractive optical element. A focal position is focal positions of a main beam and a sub-beam and is just-focus on a surface. A setting output is power of laser beam output from a laser system. Speed is sweeping speed. The inventors cut workpieces of the experiment examples and observed shapes of bottom surfaces of weld traces.

**Table 1**

| Material | | DOE | Focal position [mm] | Setting output [W] | Speed | | Bottom surface |
|---|---|---|---|---|---|---|---|
| Experiment No. | Material | | | | mm/s | m/min | |
| 1 | SUS304 10 mm | Absent | Surface JF | 3000 | 83.3 | 5.0 | Unstable |
| 2 | SUS304 10 mm | DOE is present | Surface JF | 3000 | 83.3 | 5.0 | Stable |

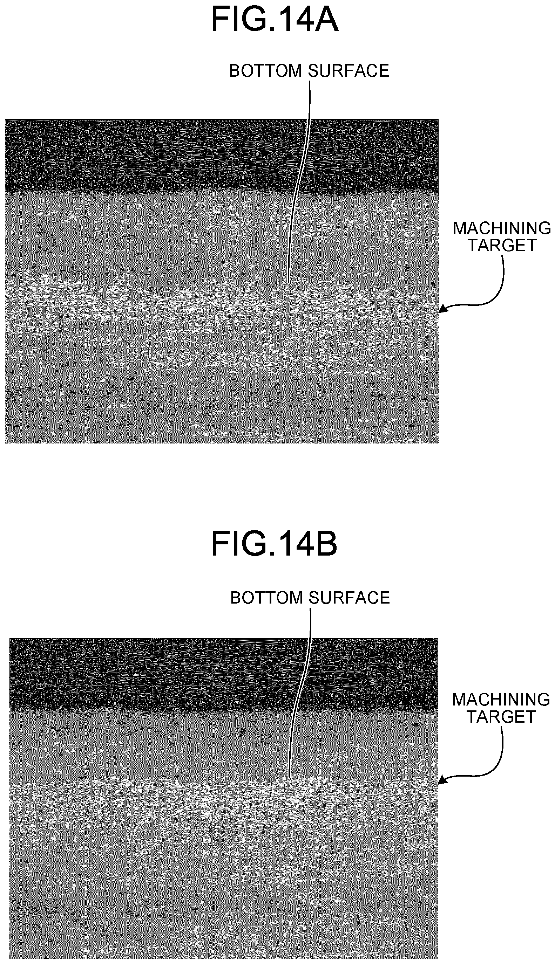

FIG. 14A is a photograph illustrating a cross section of a workpiece in a comparative example of an experiment No. 1 in Table 1. FIG. 14B is a photograph illustrating a cross section of a workpiece in an example of an experiment No. 2 in Table 1. As illustrated in FIG. 14A, in the comparative example of the experiment No. 1, a bottom surface had an unstable shape having unevenness. In contrast, as illustrated in FIG. 14B, in the example of the experiment No. 2, a bottom surface had a flat stable shape. If FIG. 14A and FIG. 14B are compared, it could be understood that flatness and stabilization of a shape can be achieved by the welding apparatus 100 according to the first embodiment.

In the embodiments, the profile (a power distribution shape) of the laser beam has a discrete power region configured by the main beam and the sub-beam. The power region is a region having power contributing to melting of the workpiece in a plane perpendicular to a laser-beam traveling direction of the laser beam. However, individual power regions do not always need to independently have power that can melt the workpiece. The power regions only have to be able to melt the workpiece with the influence of energy given to the workpiece by the other power regions.

In the example explained above, the sub-power region was configured by nine beams. When a ratio of power of the main power region and power of the sub-power region was changed from 6:4 to 1:9, the bottom surface had the flat stable shape at both the ratios. When the ratio is 6:4, a ratio of the power of the main beam and the power of one sub-beam is 6:4/9=27:2. When the ratio is 1:9, a ratio of the power of the main beam and the power of one sub-beam is 1:9/9=1:1.

Under the same conditions as the conditions in the example, the sub-power region was configured by twenty-one beams, a ratio of the power of the main power region and the power of the sub-power region was set to 10:21, and an experiment was performed. In this case as well, the bottom surface had the flat stable shape. A ratio of the power of the main beam and the power of one sub-beam is 10:21/21=10:1.

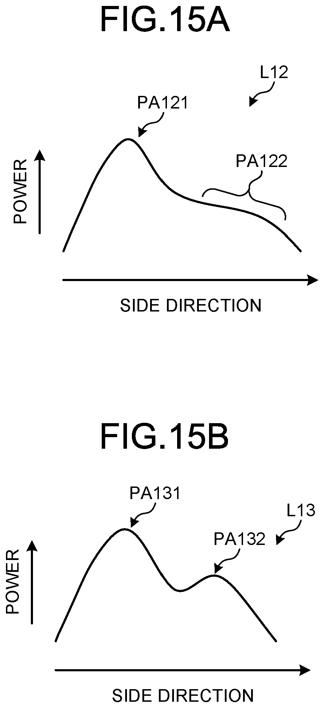

However, the power region is not limited to the discrete power region. A plurality of power regions may be continuous in a symmetrical or asymmetrical distribution. For example, FIG. 15A illustrates an example of a power distribution shape in a side direction of laser beam L12 different from a power distribution shape of the laser beam L. In the power distribution shape of the laser beam L12, arranged two power regions PA121 and PA122 are continuous in the side direction. The power region PA121 has a unimodal shape having a peak and is, for example, a main power region. The power region PA122 has a shoulder-like shape and is, for example, a sub-power region. A boundary between the two power regions PA121 and PA122 in a curve illustrated in FIG. 15A can be specified as, for example, a position of an inflection point present between the power regions PA121 and PA122.

On the other hand, FIG. 15B illustrates another example of a power distribution shape in a side direction of laser beam L13 different from the power distribution shape of the laser beam L. In the power distribution shape of the laser beam L13, arranged two power regions PA131 and PA132 are continuous. Both of the power regions PA131 and PA132 have a unimodal shape having a peak and are respectively, for example, a main power region and a sub-power region. A boundary between the two power regions PA131 and PA132 in a curve illustrated in FIG. 15B can be specified as, for example, a position of a minimum point present between the power regions PA131 and PA132. Both of the laser beams L12 and L13 can be applied as the laser beam configured by the main power region and the sub-power region in the present invention. The laser beams L12 and L13 can be realized by using, as a beam shaper, for example, an optical component such as a properly designed diffractive optical element or optical lens or an optical fiber that can control a power distribution.

Note that a welding technology that can stabilize a shape of a bottom surface of a weld trace as in the embodiments can be suitably applied to, for example, three-dimensional molding. That is, in the three-dimensional molding, when a material is melted, solidified, and deposited by laser welding to form a three-dimensional shape, if an interface equivalent to the bottom surface of the weld trace is stable, it is possible to obtain various suitable effects such as improvement of accuracy of the three-dimensional molding.

When laser beam is swept on a workpiece, the sweeping may be performed by publicly-known wobbling, weaving, output modulation, or the like to stabilize a molten pool.

The present invention are explained above based on the embodiments. However, the present invention is not limited by the embodiments. Components configured by combining, as appropriate, the components in the embodiments explained above are also included in the category of the present invention. Further effects and modifications can be easily derived by those skilled in the art. Accordingly, a wider aspect of the present invention is not limited by the embodiments and various changes are possible.

### Industrial Applicability

The present invention can be used for laser welding.

### Reference Signs List

100, 200, 300, 400, 500, 600 WELDING APPARATUS
110, 210, 310, 411, 412, 510, 611, 612 LASER SYSTEM
120, 220, 320, 420, 520, 620 OPTICAL HEAD
121, 221, 321, 421a, 421b, 521a, 521b, 621 COLLIMATE LENS
122, 222, 322, 422a, 422b, 522a, 522b, 622 FOCUSING LENS
123, 223, 323 DIFFRACTIVE OPTICAL ELEMENT
130, 230, 330, 431, 432, 531, 533, 534, 631, 632, 635 optical fiber
224a, 224b, 226, 324a, 324b MIRROR
225a, 225b, 325a, 325b MOTOR
532 DIVIDING UNIT
634 COMBINING UNIT
1501 DIFFRACTION GRATING
1502 OPTICAL ELEMENT
A1, A2 REGION
B BEAM
B1 MAIN BEAM
B2 SUB-BEAM
BS11, BS12, BS21, BS22 BOTTOM SURFACE
Cl CLAD
Co, Co1, Co2 CORE
L, L1, L12, L13, L2 LASER BEAM
P1, P2 PEAK
PA121, PA122, PA131, PA132 POWER REGION
W WORKPIECE
W1, W2 WELD TRACE
WP1, WP2 MOLTEN POOL
v ARROW

## Claims

1. A welding method comprising a step of, while irradiating laser beam toward a workpiece, relatively moving the laser beam and the workpiece and, while sweeping the laser beam on the workpiece, melting the workpiece in an irradiated portion to perform welding, wherein
the laser beam is configured by a main power region and a sub-power region, at least a part of the sub-power region is present on a sweeping direction side of the main power region, a power density of the main power region is equal to or higher than a power density of the sub-power region, and
the power density of the main power region is at least power density that can generate a keyhole.

2. The welding method according to claim 1, wherein the laser beam further includes, on a sweeping direction side of the main power region, a sub-power region having power density lower than the power density of the main power region.

3. The welding method according to claim 1, wherein the laser beam further includes, only on a sweeping direction side of the main power region, a sub-power region having power density lower than the power density of the main power region.

4. The welding method according to claim 1, wherein the laser beam includes the sub-power region only on a sweeping direction side and a rear of the main power region.

5. The welding method according to claim 1, wherein the laser beam further disperses and includes, around the main power region, a sub-power region having power density lower than the power density of the main power region.

6. The welding method according to claim 1, wherein the sub-power region has an arcuate shape, which is a part of a substantial ring shape surrounding a circumference of the main power region.

7. The welding method according to any one of claims 1 to 6, wherein a molten pool is formed by the main power region and the sub-power region of the laser beam.

8. The welding method according to any one of claims 1 to 7, wherein the main power region and the sub-power region of the laser beam are formed such that at least parts of the molten pool formed by the main power region and the molten pool formed by the sub-power region overlap.

9. The welding method according to any one of claims 1 to 8, wherein
the sub-power region of the laser beam is configured by a plurality of sub-beams,
the main power region of the laser beam is configured by a main beam, and
at least a part of the main beam includes a region which is not overlapping the respective sub-beams.

10. The welding method according to claim 1, wherein a wavelength of laser beam forming at least the sub-power region from among the main power region and the sub-power region is a wavelength having reflectivity lower than reflectivity of an infrared region of the workpiece.

11. The welding method according to any one of claims 1 to 10, wherein a wavelength of laser beam forming the main power region is same as a wavelength of laser beam forming the sub-power region.

12. The welding method according to any one of claims 1 to 11, wherein the main power region and the sub-power region are configured by laser beam emitted from a same laser system.

13. The welding method according to any one of claims 1 to 12, wherein a laser system emitting laser beam to form the main power region is different from a laser system emitting laser beam to form the sub-power region.

14. The welding method according to any one of claims 1 to 13, wherein the main power region and the sub-power region are formed by a beam shaper.

15. The welding method according to claim 14, wherein the beam shaper is a diffractive optical element.

16. The welding method according to any one of claims 1 to 15, wherein the workpiece is at least two members to be welded, and a step of disposing the workpiece in a region where laser beam is irradiated is a step of disposing the at least two members to be placed one on top of another, in contact with each other, or adjacent to each other.

17. The welding method according to claim 1, wherein an area of the sub-power region is substantially equal to or larger than an area of the main power region.

18. A welding apparatus comprising:
a laser system; and
an optical head that receives a laser beam oscillated by the laser system to generate laser beam, irradiates the generated laser beam toward a workpiece, and melts the workpiece in an irradiated portion to perform welding, wherein
the optical head is configured such that the laser beam and the workpiece are capable of relatively moving, the optical head performing the melting to perform welding while sweeping the laser beam on the workpiece, and
the laser beam is configured by a main power region and a sub-power region, at least a part of the sub-power region is present on a sweeping direction side, and power density of a main power region is equal to or higher than power density of a sub-power region.

19. The welding apparatus according to claim 18, wherein the power density of the sub-power region is at least the power density that can melt the workpiece.

20. The welding apparatus according to claim 18, wherein the laser beam further includes, on a sweeping direction side of the main power region, a sub-power region having power density lower than the power density of the main power region.

21. The welding apparatus according to claim 18, wherein the laser beam further includes the sub-power region only on a sweeping direction side of the main power region.

22. The welding apparatus according to claim 18, wherein the laser beam includes the sub-power region only on a sweeping direction side and a rear of the main power region.

23. The welding apparatus according to claim 18, wherein the laser beam further disperses and includes, around the main power region, a sub-power region having power density lower than the power density of the main power region.

24. The welding apparatus according to claim 18, wherein the sub-power region has an arcuate shape, which is a part of a ring shape surrounding a circumference of the main power region.

25. The welding apparatus according to any one of claims 18 to 24, wherein the main power region and the sub-power region of the laser beam are configured to respectively form molten pools.

26. The welding apparatus according to any one of claims 18 to 25, wherein the main power region and the sub-power region of the laser beam are formed such that at least parts of a molten pool formed by the main power region and a molten pool formed by the sub-power region overlap with each other.

27. The welding apparatus according to claim 18, wherein a wavelength of laser beam forming at least the sub-power region from among the main power region and the sub-power region is a wavelength having reflectivity lower than reflectivity of an infrared region of the workpiece.

28. The welding apparatus according to any one of claims 18 to 27, wherein a wavelength of laser beam forming the main power region is a same as a wavelength of laser beam forming the sub-power region.

29. The welding apparatus according to any one of claims 18 to 28, wherein the optical head generates, from light oscillated by a single laser system, the laser beam including the main power region and the sub-power region.

30. The welding apparatus according to claim 29, wherein the optical head includes a beam shaper disposed between the laser system and the workpiece, and the beam shaper forms the main power region and the sub-power region from the laser beam oscillated by the single laser system.

31. The welding apparatus according to claim 30, wherein the beam shaper is a diffractive optical element.

32. The welding apparatus according to any one of claims 18 to 24, wherein the laser system is configured from different two laser systems, and the main power region and the sub-power region are respectively configured by laser beam emitted from the different two laser systems.

33. The welding apparatus according to any one of claims 18 to 31, wherein the workpiece is at least two members to be welded.

34. The welding apparatus according to claim 18, wherein an area of the sub-power region is substantially equal to or larger than an area of the main power region.

35. The welding apparatus according to claim 30, wherein the beam shaper is rotatably provided.

36. The welding apparatus according to any one of claims 18 to 24, wherein the welding apparatus includes a plurality of laser systems as the laser system, and the optical head combines the laser beams emitted from the plurality of laser systems to generate the laser beam.

37. The welding apparatus according to any one of claims 18 to 24, wherein the welding apparatus
includes a plurality of laser systems as the laser system and
further includes a multi-core fiber that combines laser beams emitted from the plurality of laser systems and guides the laser beam to the optical head.

38. The welding apparatus according to claim 18, wherein the optical head is configured to be capable of sweeping the laser beam on the fixed workpiece.

39. The welding apparatus according to claim 18 wherein an irradiation position of the laser beam from the optical head is fixed, and the workpiece is held to be movable with respect to the fixed laser beam.
